# EUROPÄISCHE PATENTSCHRIFT

(11) **EP 2 046 234 B1**
(45) Veröffentlichungstag und Bekanntmachung des Hinweises auf die Patenterteilung: **25.01.2012**
(21) Anmeldenummer: 07765314.5
(22) Anmeldetag: 01.06.2007
(51) Int. Cl.: A61C 7/14, A61C 7/28

(54) **BRACKET MIT EINEM PAD**
BRACKET WITH A PAD
BRACKET AVEC PLOT

(30) Priorität: 02.06.2006 DE 102006025845
(43) Veröffentlichungstag der Anmeldung: 15.04.2009
(73) Patentinhaber: TOP-Service für Lingualtechnik GmbH, 49152 Bad Essen (DE)
(72) Erfinder: WIECHMANN, Dirk, 49152 Bad Essen (DE)
(74) Vertreter: Vossius & Partner
(86) Internationale Anmeldenummer: PCT/EP2007/055431
(87) Internationale Veröffentlichungsnummer: WO 2007/141226

(56) Entgegenhaltungen:
- EP-A- 1 080 697
- US-A- 2 926 422
- US-A- 4 575 337
- US-A1- 2006 014 116

## Beschreibung

Die Erfindung betrifft ein Bracket mit einem Pad zum Kleben desselben an einen Zahn eines Patienten, einem Bracketkörper mit einem Slot zur Aufnahme eines kieferorthopädischen Drahtes und einer kanalartigen Drahtführung, die Drahtführungsflächen zur Führung des Drahtes aufweist und der ein seitlicher Einführbereich zum Einführen des Drahts in die Drahtführung zugeordnet ist.

### Stand der Technik

US 5 037 297 beschreibt ein Bracket mit sich kreuzenden Slots zur Aufnahme zweier kieferorthopädischer Korrekturdrähte, die verschieden gerichtete Kräfte auf den Bracketkörper ausüben. Die zwei Korrekturdrähte werden von einem Verschlußstift gehalten, so dass die zwei Korrekturdrähte voneinander unabhängig wirken können.

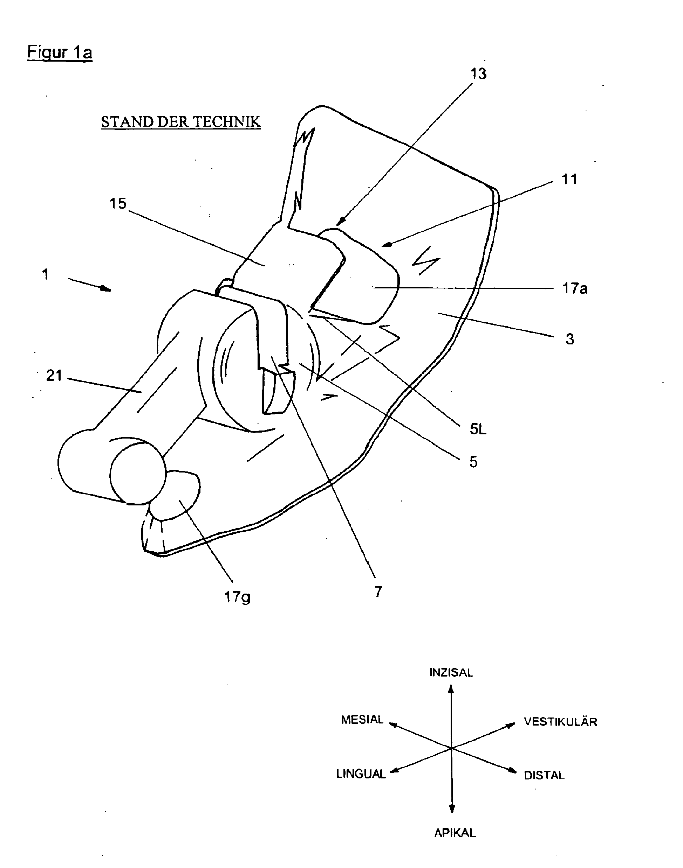

In den Figuren 1a), 1b) und 1c) sind verschiedene Ansichten eines gattungsgemäßen Brackets gezeigt, wobei das dargestellte Bracket ein Lingual-Bracket für einen unteren rechten Frontzahn ist. Das Bracket 1 umfaßt ein Pad 3 und einen Bracketkörper 5, in dem ein Slot 7 zur Aufnahme eines kieferorthopädischen Drahtes 9 gebildet ist. Von dem Bracketkörper 5 geht in inzisaler/vestibulärer Richtung ein okklusaler Hook 15 und in lingual/apikaler Richtung ein gingivaler Hook 21 aus, wobei dem okklusalen Hook 15 eine okklusale Auskehlung 17o und dem gingivalen Hook 21 eine gingivale Auskehlung 17g zugeordnet ist.

Die Hooks 15, 21, die allgemein auch als Haken oder Aufnahmeeinrichtung bezeichnet werden können, dienen während der Behandlung zum einen der Befestigung des kieferorthopädischen Drahtes 9 in dem Slot 7 mittels einer Ligatur oder eines elastischen Elementes, bspw. eines Gummis, und zum anderen der Befestigung eines Endes eines elastischen Elements, dessen anderes Ende an einem oder mehreren Bracket(s) befestigt ist, um gezielt eine Kraft auf das Bracket 1 zur translatorischen Bewegung des zugehörigen Zahns aufzubringen.

Die gingivale Auskehlung 17g erleichtert das Anordnen der Ligatur bzw. des elastischen Elementes zwischen dem gingivalen Hook 21 und der gegenüberliegenden lingualen Padfläche. Ferner kann durch die gingivale Auskehlung 17g das freie Ende des gingivalen Hooks 21 näher an der gegenüberliegenden lingualen Oberfläche des Pads 3 angeordnet werden.

Zwischen der okklusalen Auskehlung 17o und der vestibulären Seite des Hooks 15 kann alternativ zur Anordnung im Slot 7 ebenfalls ein kieferorthopädischer Draht 9 angeordnet werden. Die vestibuläre Fläche des okklusalen Hooks 15, die okklusale Auskehlung 17o und eine Lagerfläche 5L des Bracketkörpers 5 bilden auf diese Weise jeweils eine Drahtführungsfläche 11F einer kanalartigen Draht führung 11 für den kieferorthopädischen Draht 9.

Der kieferorthopädische Draht ist in einem geraden Zustand leicht durch einen Einführbereich 13 in die Drahtführung 11 einzuführen und aus dieser zu entnehmen. Um den kieferorthopädischen Draht 9 zwischen den Drahtführungsführungsflächen 11 zu halten, wird dieser mittels einer Ligatur oder eines Gummis fixiert, die bzw. das um den gingivalen Hook 21 geschlungen wird.

Der kieferorthopädische Draht 9 wird häufig zu Beginn einer kieferorthopädischen Behandlung in die Drahtführung 11 einligiert, um Engstände und Verschachtelungen von Zähnen eines Patienten grob aufzulösen. Die Zähne erfahren dadurch zu Beginn der Behandlung zum überwiegenden Anteil eine Translation und nur zu einem geringen Anteil eine Rotation. Aus diesem Grund ist die relativ ungenaue Führung in der Drahtführung 11, d.h. eine formschlüssige Führung mit Spiel, ausreichend. Zur Auflösung der Engstände und Verschachtelungen der Zähne werden weiche Drähte in die Drahtführung 11 einligiert, da sich diese am leichtesten verformen lassen. Bevorzugt werden in diesem Behandlungsstadium bspw. superelastische Rundbögen von 0,012" (0,03048 cm) bis 0,016" (0,04064 cm) eingesetzt.

Gegen Ende der Behandlung erfahren die Zähne nur noch zu einem geringen Anteil eine Translation und zu einem überwiegenden Anteil eine Rotation, weshalb der kieferorthopädische Draht 9 in den exakt geformten Slot 7 einligiert wird, um das Spiel des kieferorthopädischen Drahtes 9 zu verringern und eine bessere Kontrolle über die Bewegung des zugehörigen Zahns zu erreichen. In diesem Behandlungsstadium werden steifere Drähte verwendet, da die Zähne schon grob ausgerichtet sind und mit diesen größere Kräfte und Drehmomente zur Bewegung der Zähne übertragen werden können.

Die klinische Erfahrung zeigt jedoch, daß Reibung (Friktion), die zwischen den Drahtführungsflächen 11 F und der Ligatur bzw. dem Gummi auf der einen Seite und dem kieferorthopädischen Draht 9 auf der anderen Seite entsteht, einen nachteiligen Einfluß auf die Behandlungsdauer und das Behandlungsergebnis hat.

Die EP 1080697 A1 beschreibt ein Bracket mit einem Bracketkörper, in den ein Hauptslot eingeformt ist, der sich zum Pad hin öffnet. Zur Installation eines Bogendrahts im Slot wird der Draht mit einer Ligatur fixiert, wobei ein Ligaturdraht in einem zusätzlichen Slot eingehakt werden kann.

Die US 4,575,337 zeigt Brackets mit einem Pad und Bracketkörper, in welchem ein einseitig offener U-förmiger Slot mit Rechteckprofil eingelassen ist, in welchem ein Bogendraht anzuordnen ist. Es ist vorgesehen, dass ein im Slot angeordneter Bogendraht dort kraftschlüssig fixiert ist.

Die US 2,926,422, auf der die zweiteilige Form des Anspruchs basiert, beschreibt Brackets, die anstelle eines Pads einen Ring aufweisen, der um einen Zahn gelegt werden kann, mit einem angelöteten Körper, in dem nur ein Aufnahmekanal für einen Draht eingeformt ist. Der Aufnahmekanal ist in Längsrichtung des Drahts von jeweils versetzt angeordneten Schenkeln umschlossen, die zwischen sich Lücken aufweisen, durch die der Draht in einer elastischen gebogenen Konfiguration eingebracht werden kann.

Die US 2006/014116 A1 beschreibt ein Bracket mit einem Pad und einem Bracketkörper, in welchem ein Slot zur Aufnahme eines Bogendrahts eingeformt ist. Der Slot weist eine vorspringende Feder auf, mit welcher ein Bogendraht im Slot fixiert wird.

### Aufgabe der Erfindung

Aufgabe der vorliegenden Erfindung ist es daher, ein Bracket, das auch als kieferorthopädischer Träger bezeichnet werden kann, mit einem Pad, das auch als Auflageelement bezeichnet werden kann, bereitzustellen, bei dem die zwischen den Drahführungsflächen 11 F und der Ligatur bzw. dem Gummi auf der einen Seite und dem kieferorthopädischen Draht 9 auf der anderen Seite entstehende Friktion reduziert ist.

### Allgemeine Beschreibung der Erfindung

Die vorgenannte Aufgabe wird mit einem Bracket nach Anspruch 1 gelöst bei dem der Einführbereich eines gattungsgemäßen Brackets in Längsrichtung des Drahtes einen gebogenen Abschnitt aufweist, durch den der Draht in einem elastisch verformten Zustand in die Drahtführung einführbar ist, so daß der Draht bei einer Rückverformung in einen geraden Zustand in die Drahtführung einrastet, und daß die Drahtführungsflächen den Draht zirkulär umschließen, so daß der Draht durch die Drahtführungsflächen längsverschieblich in der Drahtführung gehalten und gegen ein seitliches Entweichen aus der Drahtführung gesichert ist.

In einem Ausführungsbeispiel kann die Drahtführung drei zum Draht zirkulär versetzte Drahtführungsflächen aufweisen.

Vorteilhaft weist das Bracket in diesem Fall einen okklusalen Hook mit einem verbreiterten Kopf auf, so daß jeweils eine Drahtführungsfläche durch eine linguale Padfläche, eine vestibuläre Hookfläche und eine apikale Fläche des Kopfes gebildet ist.

Ferner umfaßt in diesem Fall der Einführbereich bevorzugt eine okklusale Auskehlung, die in dem Pad gegenüber dem Kopf gebildet ist.

Der Einführbereich umfaßt in diesem Fall die okklusale Auskehlung und einen Freiraum zwischen einer vestibulären Fläche des Kopfes und der gegenüberliegenden lingualen Padfläche.

Die Drahtführungsfläche des Kopfes ist vorteilhaft gerade, nach innen gekrümmt oder nach außen gekrümmt gebildet.

Jeweils radial zum Draht weist die apikale Fläche des Kopfes vorteilhaft einen Abstand von der lingualen Padfläche und der vestibulären Hookfläche auf, der etwas größer als ein Durchmesser des Drahtes ist, so daß dieser in der Drahtführung in apikaler-inzisaler-Richtung bewegbar ist.

In einem weiteren Ausführungsbeispiel weist die Drahtführung vier zum Draht zirkulär versetzte Drahtführungsflächen auf.

In diesem Fall weist das Pad vorteilhaft zwei sich in Längsrichtung des Drahtes gegenüberliegende und nach lingual erstreckende Zapfen auf, die jeweils eine Drahtführungsfläche bilden.

Vorteilhaft sind die Zapfen in diesem Fall im wesentlichen zylinderförmig.

Die Drahtführungsfläche der Zapfen ist vorteilhaft nach außen gekrümmt oder gerade gebildet.

Die Zapfen sind vorteilhaft in apikaler Richtung auf gleicher Höhe angeordnet, und liegen an derselben Seite des Drahts, eine Drahtführungsfläche bildend, an.

Bevorzugt sind in diesem Fall jeweils eine der weiteren Drahtführungsflächen durch eine vestibuläre Fläche eines okklusalen Hooks, eine Lagerfläche des Bracketkörpers und eine linguale Fläche des Pads gebildet.

Die Drahtführungsflächen können den Draht zirkulär vollständig umschließen.

Alternativ können die Drahtführungsflächen den Draht zirkulär teilweise umschließen.

Weiterhin können erfindungsgemäße Brackets aus einem Pad, einem Bracketkörper mit den erfindungsgemäßen Drahtführungsflächen und zumindest einem oder zwei Hooks bestehen.

Bevorzugt sind die Drahtführungsflächen bzw. der diese aufweisende Slot integral und/oder einstückig mit dem Bracketkörper gebildet. Besonders bevorzugt sind alle Bestandteile des Brackets, das Pad, ein, zwei oder mehr Bracketkörper, jeweils mit den erfindungsgemäßen Drahtführungsflächen, und optional mit zumindest einem oder zwei Hooks integral und/oder einstückig miteinander geformt. Die integrale Formung des Brackets mit diesen erfindungsgemäßen Elementen kann durch Metallgußverfahren, Lasersintern von Vorläufermaterial, z.B. Metallpulver, oder Fräsen aus einem Materialstück erfolgen.

### Genaue Beschreibung der Erfindung

Die Erfindung wird nachfolgend anhand von zwei Ausführungsbeispielen unter Bezugnahme auf eine Zeichnung beschrieben. Es zeigen:
Fig. 1a) eine perspektivische Ansicht eines Brackets gemäß dem Stand der Technik bzw. als Vergleichsbeispiel;
Fig. 1b) eine Ansicht des Brackets der Fig. 1a) in distaler-mesialer-Richtung;
Fig. 1c) eine Ansicht des Brackets der Fig. 1a) in inzisaler-apikaler-Richtung;
Fig. 2a) eine perspektivische Ansicht eines Brackets, das eine erfindungsgemäße Drahtführung mit Einführbereich aufweist;
Fig. 2b) eine Ansicht des Brackets der Fig. 2a) in distaler-mesialer-Richtung;
Fig. 2c) eine Ansicht des Brackets der Fig. 2a) in inzisaler-apikaler-Richtung;
Fig. 2d) eine Ansicht des Brackets der Fig. 2a) in inzisaler-apikaler-Richtung, wobei jedoch zusätzlich ein kieferorthopädischer Draht in dem Einführbereich dargestellt ist;
Fig. 2e) eine Ansicht des Brackets der Fig. 2a) in inzisaler-apikaler-Richtung, wobei jedoch zusätzlich ein kieferorthopädischer Draht in der Drahtführung angeordnet ist;
Fig. 2f) eine Ansicht des Brackets der Fig. 2a) in distaler-mesialer-Richtung, wobei jedoch zusätzlich ein kieferorthopädischer Draht in der Drahtführung angeordnet ist;
Fig. 3) eine Ansicht einer ersten Variante des Brackets der Fig. 2 in distaler-mesialer-Richtung;
Fig. 4) eine Ansicht einer zweiten Variante des Brackets der Fig. 2 in distaler-mesialer-Richtung;
Fig. 5a) eine Ansicht eines Brackets in lingualer-vestibuläer-Richtung, das eine erfindungsgemäße Drahtführung mit Einführbereich gemäß einem weiteren Ausführungsbeispiel aufweist;
Fig. 5b) eine Ansicht des Brackets der Fig. 5a) in mesialer- distaler-Richtung; und
Fig. 5c) eine Ansicht des Brackets der Fig. 5a) in inzisaler-apikaler-Richtung.

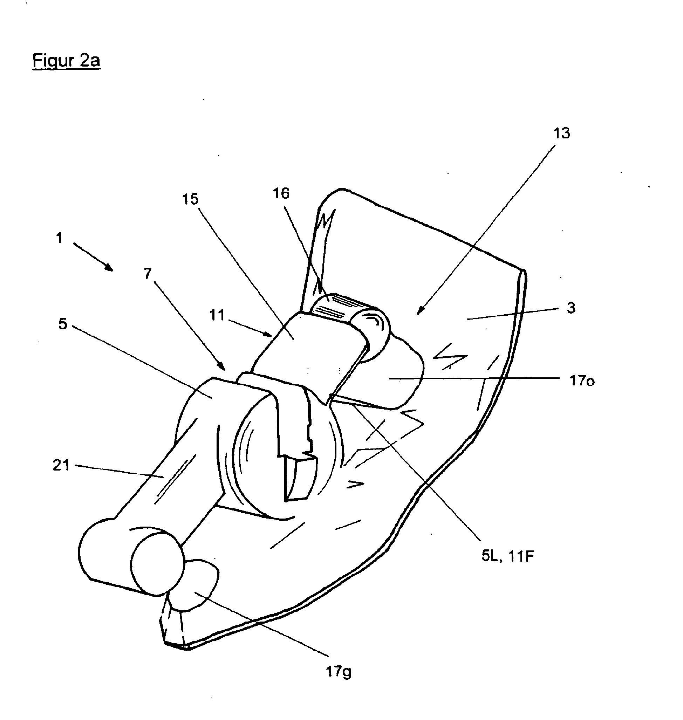

Unter Bezug auf die Figuren 2a), 2b) und 2c) wird zunächst der Aufbau eines ersten Ausführungsbeispiels einer erfindungsgemäßen Drahtführung 11 mit Einführbereich 13 eines Brackets 1 beschrieben.

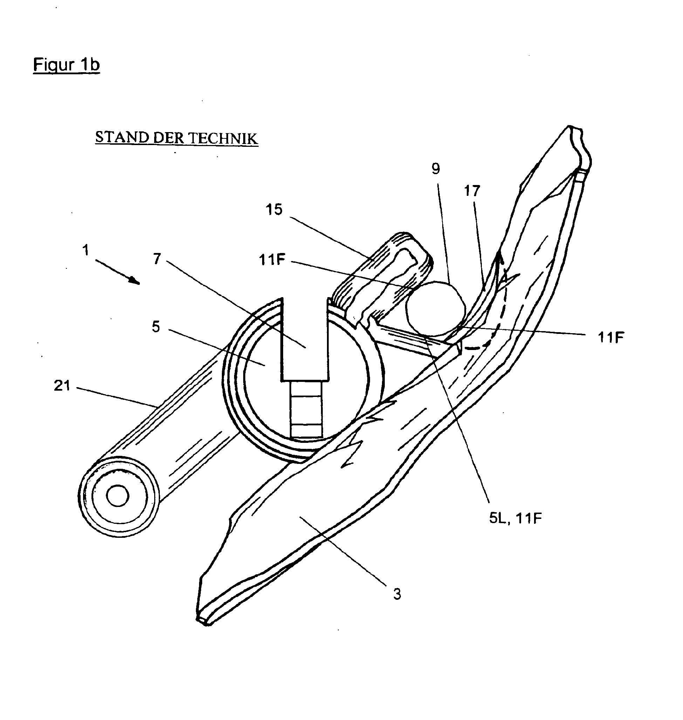

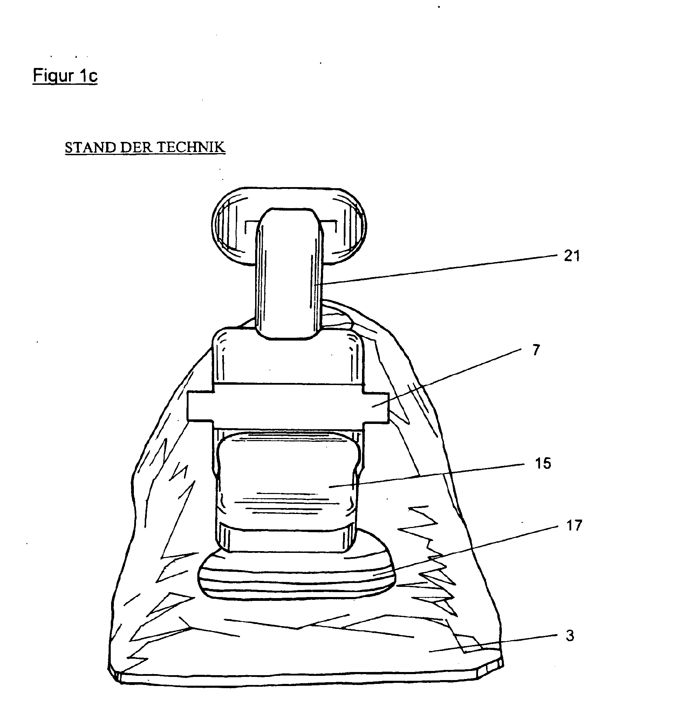

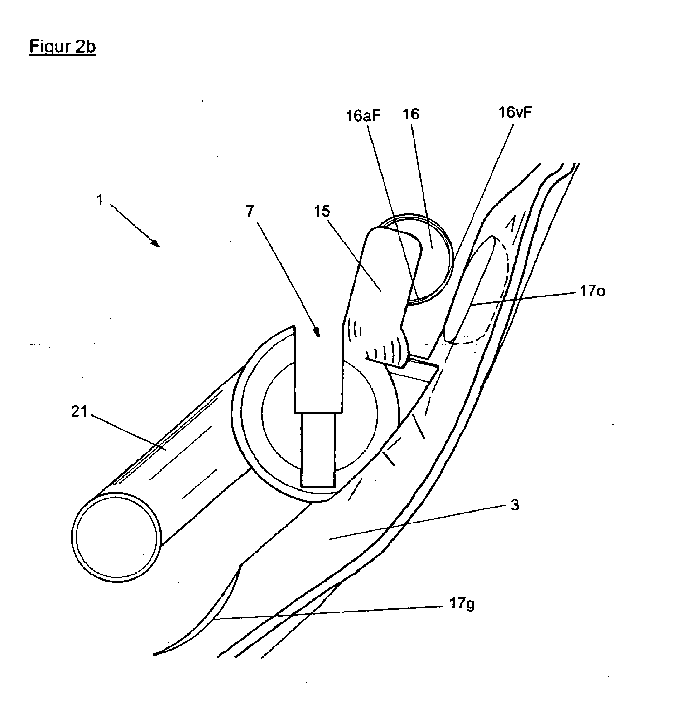

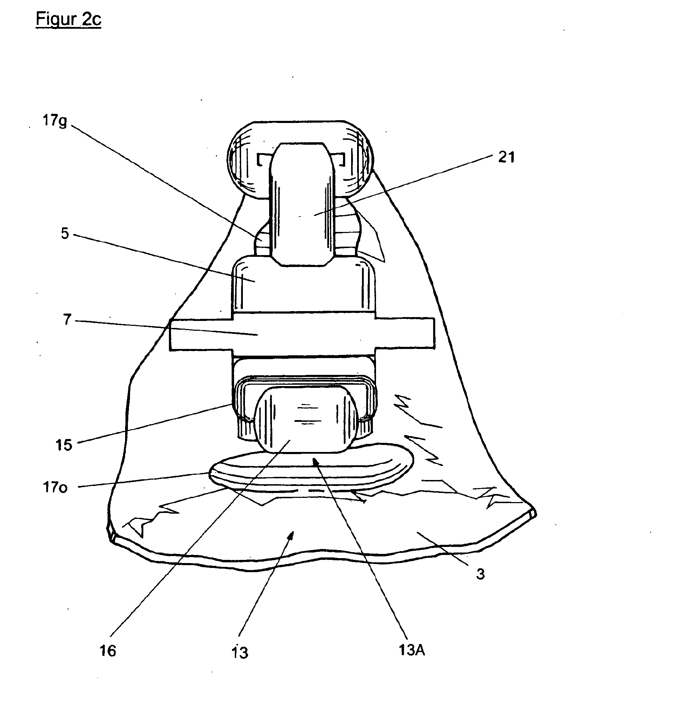

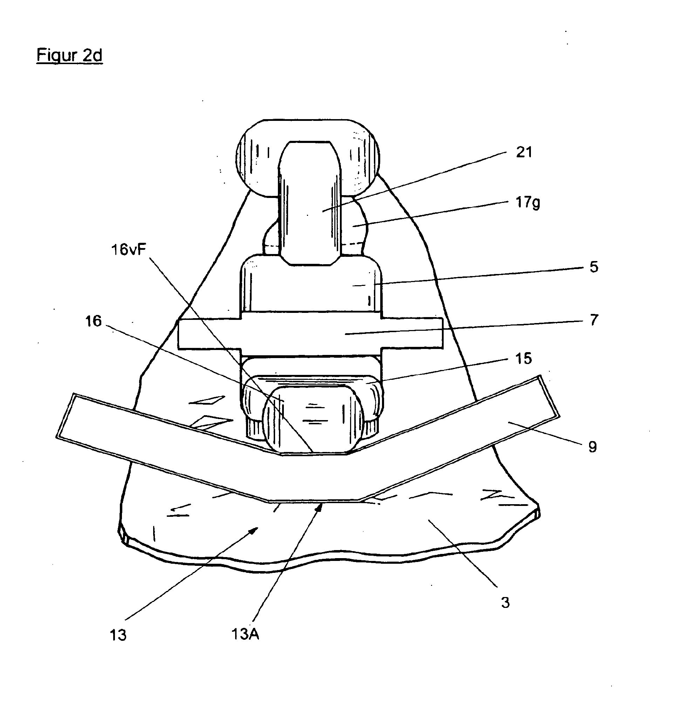

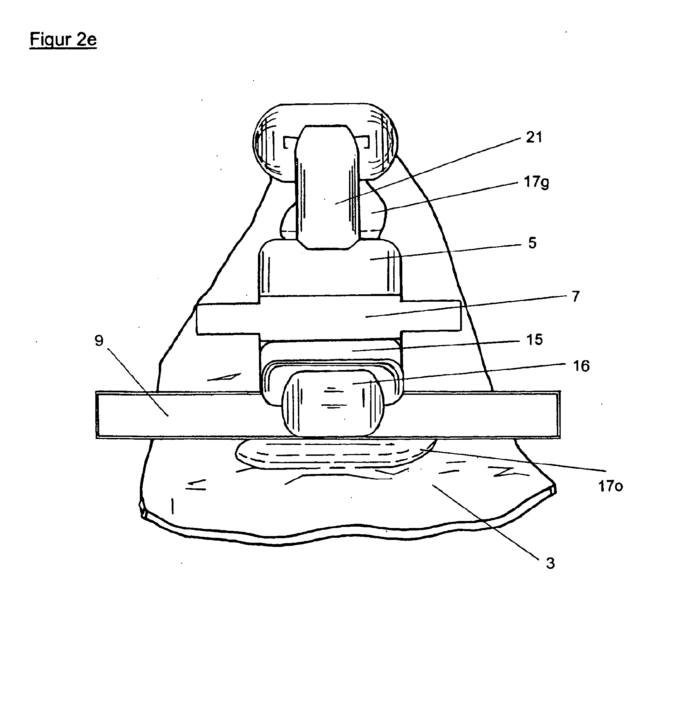

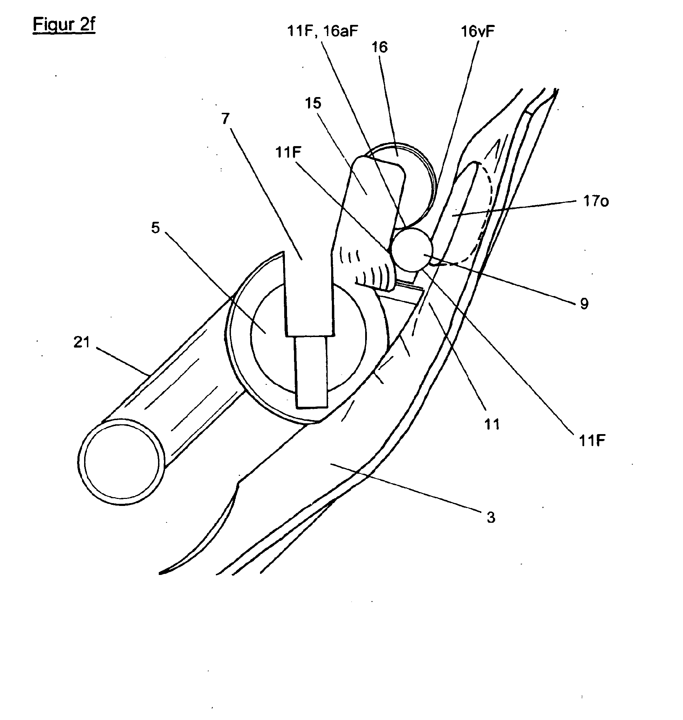

Wie zuvor zu Fig. 1 beschrieben, umfaßt das Bracket 1 der Fig. 2 ein Pad 3 und einen Bracketkörper 5, in dem ein Slot 7 zur Aufnahme eines kieferorthopädischen Drahtes 9 gebildet ist. An dem Bracketkörper 5 ist ebenfalls ein okklusaler Hook 15 und ein gingivaler Hook 21 befestigt. Dem freien Ende des gingivalen Hooks 21 liegt eine gingivale Auskehlung 17g gegenüber, wie zuvor zu Fig. 1 beschrieben.

An dem okklusalen Hook 15 ist jedoch zusätzlich ein Kopf 16 gebildet, der im wesentlichen zylinderförmig ist und entlang der mesialen-distalen-Richtung verläuft. Der Kopf 16 steht mit einer vestibulären Fläche 16vF über die vestibuläre Fläche des okklusalen Hooks 15 vor.

Eine dem Kopf 16 gegenüberliegende Auskehlung 17o in dem Pad 3 weist eine Kontur mit einer derartigen Tiefe auf, daß der gegenseitige Abstand zwischen der vestibulären Oberflächenkontur des Kopfes 16 und der Oberflächenkontur der Auskehlung 17o in lingualer-vestibulärer-Richtung mindestens einem Durchmesser eines einzuligierenden kieferorthopädischen Drahtes 9 entspricht, so daß er zwischen diesen angeordnet werden kann, jedoch nur in einem gebogenen, elastisch verformten Zustand.

Drahtführungsflächen 11 F der Drahtführung 11 zur Führung des kieferorthopädischen Drahtes 9 sind jeweils von einer apikalen Fläche 16aF des Kopfes 16, einer lingualen Oberfläche des Pads 3 sowie einer vestibulären Fläche des okklusalen Hooks 15 gebildet, wie in Fig. 2f) dargestellt. Alternativ kann zusätzlich eine Lagerfläche 5L des Bracketkörpers 5 eine Drahtführungsfläche 11F bilden, wenn diese eine entsprechende Breite (lingualvestibulär) aufweist.

Ein Einführbereich 13 zum Einführen des kieferorthopädischen Drahtes 9 in die Drahtführung 11 weist somit einen Abschnitt 13A auf, in dem der Draht 9 (um den Kopf 16 und in die Auskehlung 17o) gebogen ist, wodurch ein Einführen des Drahts 9 in die Drahtführung 11 und ein seitlichen Entweichen des Drahts 9 aus der Umschließung durch die Drahtführungsflächen 11F in einem geraden Zustand verhindert ist. Der gebogene Abschnitt 13A des Einführbereichs 13, in dem der Draht 9 gebogen ist, umfaßt vorliegend einen Freiraum zwischen dem Kopf 16 und der Auskehlung 17o.

Unter Bezug auf die Figuren 2d), 2e) und 2f) wird nachfolgend das Einführen eines kieferorthopädischen Drahtes 9 in die Drahtführung 11 beschrieben.

Der kieferorthopädische Draht 9 wird ausgehend von einem geraden Zustand um die vestibuläre Fläche 16vF des Kopfes 16 gebogen, wie in Fig. 2d) dargestellt. Die Verformung des Drahtes 9 ist so gering, daß sie in einem elastischen Bereich stattfindet, so daß sich der Draht dabei stets in einem elastisch verformten Zustand befindet. In diesem elastisch verformten Zustand kann der Draht 9 durch den gebogenen Abschnitt 13A des Einführbereichs 13 geführt werden, d.h. durch den Freiraum zwischen dem Kopf 16 und der Auskehlung 17o.

Hat der Draht den gebogenen Abschnitt 13A des Einführbereichs 13 passiert, so verformt er sich aufgrund der eigenen Rückstellkraft in seinen geraden Zustand zurück, wie in Fig. 2e) und f) dargestellt. In diesem geraden Zustand ist der Draht zwischen den Drahtführungsflächen 11F der Drahtführung 11 angeordnet, d.h. zwischen der apikalen Fläche 16aF des Kopfes 16, der lingualen Oberfläche des Pads 3 sowie der vestibulären Fläche des okklusalen Hooks 15.

Der kieferorthopädische Draht 9 ist von den Drahtführungsflächen 11F zirkulär teilweise umschlossen, wie in Fig. 2f) dargestellt.

Der kieferorthopädische Draht 9 ist durch die Drahtführungsflächen 11F längsverschieblich in der Drahtführung 11 gehalten. Ferner ist er durch diese gegen ein seitliches Entweichen aus der Drahtführung 11 gesichert, im Gegensatz zum Stand der Technik gemäß der Fig. 1.

Der in der Drahtführung 11 gemäß der Fig. 2 gehaltene kieferorthopädische Draht 11 wird daher nicht durch eine Ligatur oder ein elastisches Element in der Drahtführung 11 gehalten, sondern ausschließlich durch die Drahtführungsflächen 11F. Dadurch verringert sich die auf den kieferorthopädischen Draht 9 senkrecht zu seiner Längsrichtung ausgeübte Kraft erheblich, wodurch die Friktion gegenüber dem Stand der Technik gemäß der Fig. 1 deutlich verringert ist.

Um den kieferorthopädischen Draht 9 aus der Drahtführung 11 zu entnehmen, muß dieser erneut in seinen gebogenen, elastisch verformten Zustand überführt werden. In diesem Zustand kann er dann an dem Kopf 16 vorbei geführt werden, d.h. durch den Freiraum zwischen dem Kopf 16 und der Auskehlung 170_{.} Aufgrund seiner eigenen Rückstellkraft verformt sich der Draht 9 danach wieder in seinen geraden Zustand.

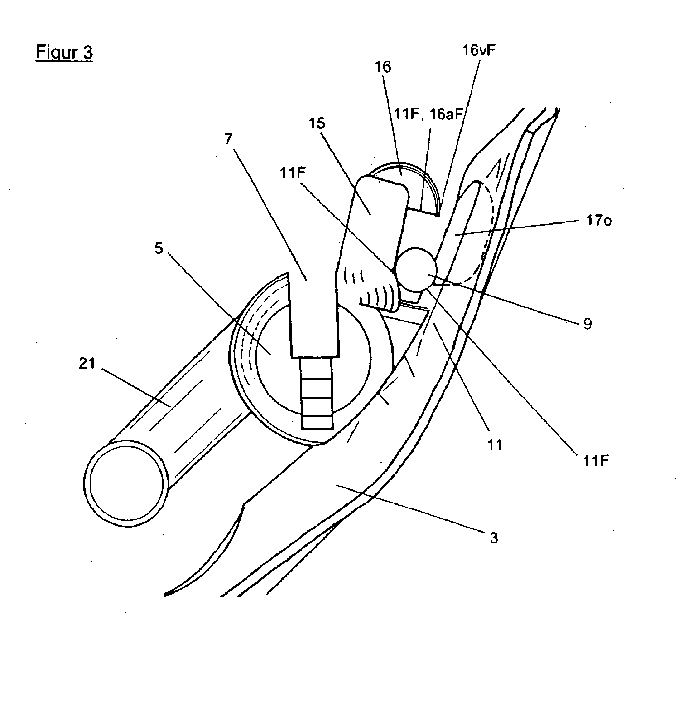

Unter Bezug auf Fig. 3 wird nachfolgend eine Variante dieses Ausführungsbeispiels beschrieben.

Der Kopf 16 der Fig. 3 weist eine apikale Fläche 16aF auf, die gerade gebildet ist und eine Drahtführungsfläche 11 F bildet. Diese Drahtführungsfläche 11F ist in einem Abstand von den beiden weiteren Drahtführungsflächen 11F angeordnet, der größer als ein Durchmesser eines typischerweise verwendeten kieferorthopädischen Drahtes 9 ist.

In die Drahtführung 11 der Fig. 3 können kieferorthopädische Drähte 9 mit einer großen Bandbreite an Querschnittsformen und Querschnittsabmessungen eingebracht werden.

Das Einführen und Entnehmen des kieferorthopädischen Drahtes 9 in die bzw. aus der Drahtführung 11 erfolgt dabei wie zuvor zu Fig. 2 beschrieben.

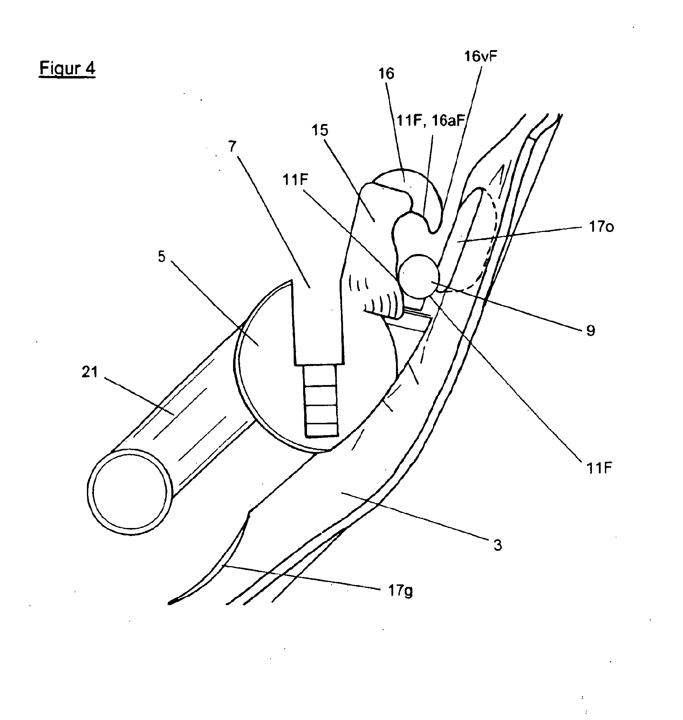

Unter Bezug auf Fig. 4 wird nachfolgend eine weitere Variante dieses Ausführungsbeispiels beschrieben.

Der Kopf 16 weist in dieser Variante eine nach innen gekrümmte, apikale Oberfläche 16aF auf, die ebenfalls als Drahtführungsfläche 11 dient. Die Krümmung dieser Oberfläche entspricht im wesentlichen der Krümmung des kieferorthopädischen Drahts 9, so daß der Draht 9 in diese gleiten kann.

Diese Variante kann gegenüber der Variante der Fig. 3 eine verbesserte Führung bieten, da das Spiel des Drahtes 9 in der Drahtführung 11 aufgrund der lingualen-vestibulären-Begrenzung durch die apikale Fläche 16aF des Kopfes 16 geringer ist.

Die Drahtführung 11 der Fig. 4 ist auf eine Drahtquerschnittsform optimiert, vorzugsweise auf die mit dem größten Durchmesser. Es können aber auch Drähte 9 mit einer anderen Querschnittsform in der Drahtführung 11 der Fig. 4 angeordnet werden.

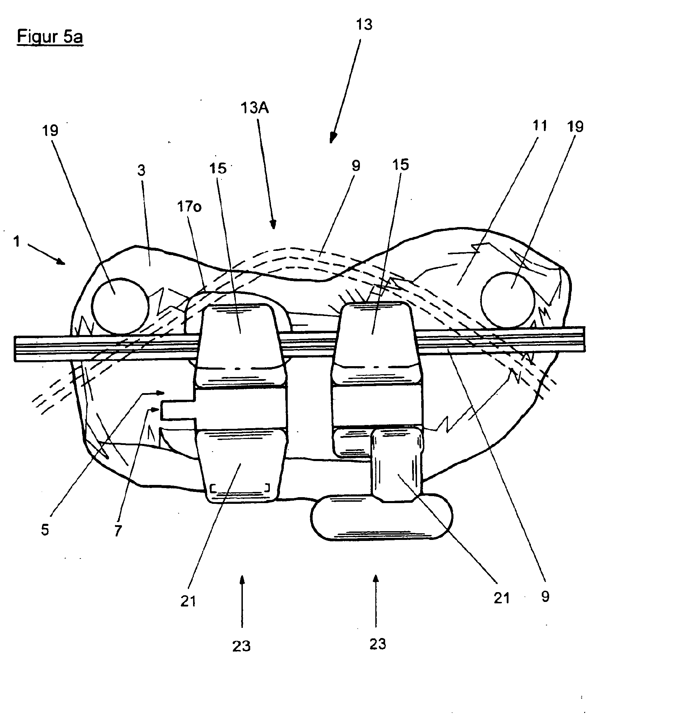

Unter Bezug auf die Fig. 5a), 5b) und 5c) wird nachfolgend ein zweites Ausführungsbeispiel der vorliegenden Erfindung anhand eines Brackets 1 für einen unteren linken Molaren beschrieben.

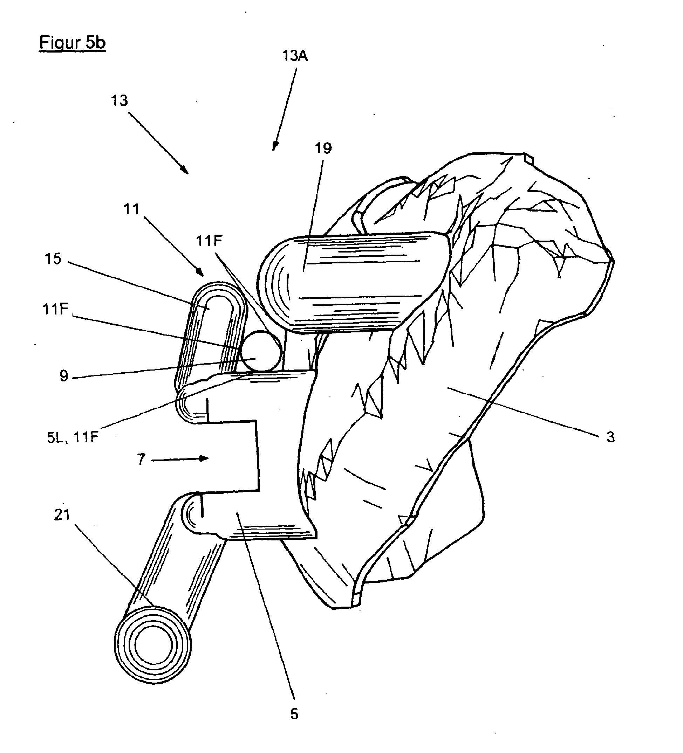

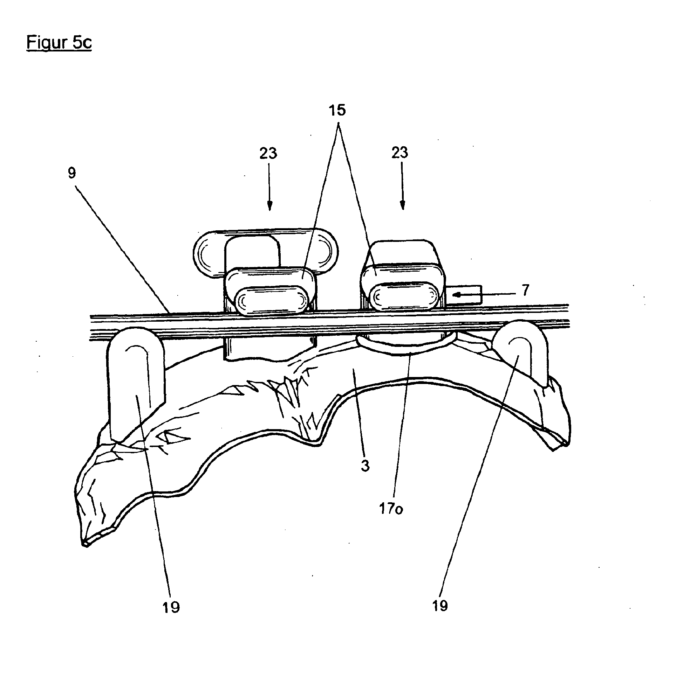

Das Bracket 1 der Fig. 5 weist ein Pad 3 und einen Bracketkörper 5 mit zwei Wings 23 auf, wobei in diesem ferner ein Slot 7 zur Aufnahme eines kieferorthopädischen Drahtes 9 gebildet ist. Jeder Wing 23 umfaßt einen okklusalen Hook 15.

Ferner weist das Bracket 1 zwei von vestibulär nach lingual verlaufende Zapfen 19 auf, die in Längsrichtung des kieferorthopädischen Drahtes 9 versetzt zueinander angeordnet sind. Die Zapfen 19 weisen einen kreisförmigen Querschnitt und ein halbkugelförmiges freies Ende auf. Ferner sind sie in apikaler Richtung auf derselben Höhe angeordnet, und liegen an derselben Seite des kieferorthopädischen Drahtes 9 an.

Wie in Fig. 5b) dargestellt, bilden eine vestibuläre Fläche der okklusalen Hooks 15 der Wings 23, eine Lagerfläche 5L des Bracketkörpers 5, eine linguale Fläche des Pads 3 und apikale Flächen der Zapfen 19 jeweils eine Drahtführungsfläche 11F. Die auf diese Weise angeordneten Drahtführungsflächen 11F umschließen den Draht 11 zirkulär. Wiederum ist der Draht 9 durch die Drahtführungsflächen 11F längsverschieblich in der Drahtführung 11 gehalten. Dadurch, daß der Draht 9 zirkulär von den Drahtführungsflächen 11F umschlossen ist, ist ferner ein seitliches Entweichen desselben aus der Drahtführung 11 verhindert, wie insbesondere aus Fig. 5b) ersichtlich.

Der kieferorthopädische Draht 9 kann aufgrund der okklusalen Hooks 15 nicht von lingual nach vestibulär in die Drahtführung 11 eingeführt werden. Ein Einführbereich 13 zum Einführen des kieferorthopädischen Drahtes 9 in die Drahtführung 11 weist einen Abschnitt 13A auf, in dem der Draht 9 (um die okklusalen Hooks 15) nach oben gebogen ist, siehe Fig. 5a). Dadurch ist ein Einführen des Drahts 9 in die Drahtführung 11 und ein seitliches Entweichen des Drahts 9 aus derselben in einem geraden Zustand verhindert. Der gebogene Abschnitt 13A des Einführbereichs 13, in dem der Draht 9 gebogen ist, umfaßt vorliegend einen Freiraum inzisal der okklusalen Hooks 15 der Wings 23 und apikal der Zapfen 19.

Unter Bezug auf Fig. 5a) wird nachfolgend das Einführen des Drahtes 9 in die Drahtführung 11 und das Entnehmen des Drahtes 9 aus derselben beschrieben.

Ausgehend von einem geraden Zustand wird der Draht 9 um die okklusalen Hooks 15 gebogen, wie in Fig. 5a) gestrichelt dargestellt. In diesem elastisch verformten Zustand kann der Draht 9 von lingual nach vestibulär über die Hooks 15 und mit den unteren Enden unten an den Zapfen 19 vorbei geführt werden, wie in Fig. 5a) dargestellt.

Stößt der Draht 9 beim Bewegen in die vestibuläre Richtung an dem Pad 3 an, so kann die Kraft zur elastischen Verformung des Drahts 9 zurückgenommen werden, und der Draht 9 verformt sich aufgrund seiner eigenen Rückstellkraft in den geraden Zustand zurück, der in Fig. 5a) mit der durchgezogenen Linie dargestellt ist.

In dem geraden Zustand ist der Draht 9 von den Drahtführungsflächen 11F umschlossen, wie zuvor beschrieben und in Fig. 5b) dargestellt.

Soll der Draht 9 aus der Drahtführung 11 entnommen werden, wird wie folgt vorgegangen. Zunächst wird der Draht 9 so gebogen, daß er die in Fig. 5a) gestrichelt dargestellte Lage einnimmt. Aus dieser Position heraus wird der Draht 9 nach lingual bewegt, bis er lingual der Hooks 15 und der Zapfen 19 angeordnet ist. Die Kraft zur Verformung des Drahtes 9 wird dann zurückgenommen, wodurch sich dieser in seinen geraden Zustand durch die eigene Rückstellkraft zurückverformt.

Die Drahtführung 11 der unter Bezug auf die Fig. 2 bis 5 beschriebenen Ausführungsformen ist eine okklusale Drahtführung 11, d.h. sie ist mit dem okklusalen Hook 15 gebildet. Die Drahtführung 11 kann alternativ eine gingivale Drahtführung 11 sein, d.h. mit dem gingivalen Hook 21 gebildet sein. In diesem Fall müßte bspw. der gingivale Hook 21 einen Kopf aufweisen, dem eine entsprechende Auskehlung in dem gegenüberliegenden Pad zugeordnet ist, um eine der Fig. 2 entsprechende Drahtführung apikal jenseits des Slots 7 zu bilden.

Der kieferorthopädische Draht 9 kann allgemein eine beliebige Querschnittsform aufweisen, bspw. kreisförmig, elliptisch, quadratisch oder rechteckig, wobei es evtl. vorteilhaft sein kann, die Drahtführungsflächen 11 F an die Querschnittsform entsprechend anzupassen.

Das kieferorthopädische Bracket 1 ist bevorzugt ein patientenspezifisches, kann alternativ jedoch ein teilweise oder vollständig vorkonfektioniertes Bracket sein.

Das Bracket 1 kann ein linguales Bracket sein, wie zuvor beschrieben, kann jedoch alternativ auch ein bukkales Bracket sein.

Die Drahtführungsflächen 11F können den Draht 9 zirkulär teilweise oder vollständig umschließen, letzteres beispielsweise dadurch, daß die Zapfen 19 in Fig. 5b) nach lingual verlängert werden.

Die kieferorthopädischen Drähte 9 werden in der Drahtführung 11 mit Spiel angeordnet, das sich durch den gegenseitigen Abstand der Drahtführungsflächen 11 F ergibt.

### Bezueszeichenliste:

- 1: Bracket
- 3: Pad
- 5: Bracketkörper
- 5L: Lagerfläche des Bracketkörpers
- 7: Slot
- 9: Draht
- 11: Drahtführung
- 11F: Drahtführungsfläche der Drahtführung
- 13: Einführbereich
- 13A: gebogener Abschnitt des Einführbereichs
- 15: okklusaler Hook
- 16: Kopf
- 16aF: apikale Fläche des Kopfs
- 16vF: vestibuläre Fläche des Kopfs
- 17o: okklusale Auskehlung
- 17g: gingivale Auskehlung
- 19: Zapfen
- 21: gingivaler Hook
- 23: Wing

## Patentansprüche

1. Bracket (1) mit einer kanalartigen Drahtführung (11), die Drahtführungsflächen (11F) zur Führung eines Drahts (9) aufweist und der ein seitlicher Einführbereich (13) zum Einführen des Drahtes (9) in die Drahtführung (11) zugeordnet ist, wobei der Einführbereich (13) in Längsrichtung des Drahts (9) einen gebogenen Abschnitt (13A) aufweist, durch den der Draht (9) in einem elastisch verformten Zustand in die Drahtführung (11) einführbar ist, so daß der Draht (9) bei einer Rückverformung in einen geraden Zustand in die Drahtführung (11) einrastet, und daß die Drahtführungsflächen (11F) den Draht (9) zirkulär umschließen, so daß der Draht (9) durch die Drahtführungsflächen (11F) längsverschieblich in der Drahtführung (11) gehalten und gegen ein seitliches Entweichen aus der Drahtführung (11) gesichert ist, **dadurch gekennzeichnet, daß** das Bracket (1) ein Pad (3) zum Kleben desselben an einen Zahn eines Patienten, einen Bracketkörper (5) mit einem Slot (7) zur Aufnahme eines kieferorthopädischen Drahtes (9) und einen okklusalen Hook (15) mit einem verbreiterten Kopf (16) aufweist, und jeweils eine Drahtführungsfläche (11F) durch eine linguale Padfläche, eine vestibuläre Hookfläche und eine apikale Fläche (16aF) des Kopfes (16) gebildet ist.

2. Bracket nach Anspruch 1, **dadurch gekennzeichnet, daß** der Einführbereich (13) eine okklusale Auskehlung (17o) umfaßt, die in dem Pad (3) gegenüber dem Kopf (16) gebildet ist.

3. Bracket nach Anspruch 1 oder 2, **dadurch gekennzeichnet, daß** die Drahtführung (11) drei zum Draht (9) zirkulär versetzte Drahtführungsflächen (11F) aufweist.

4. Bracket nach einem der voranstehenden Ansprüche, **dadurch gekennzeichnet, daß** der Einführbereich (13) die okklusale Auskehlung (17o) und einen Freiraum zwischen einer vestibulären Fläche des Kopfes (16) und der gegenüberliegenden lingualen Padfläche umfaßt.

5. Bracket nach einem der voranstehenden Ansprüche, **dadurch gekennzeichnet, daß** die Drahtführungsfläche (11F) des Kopfes (16) gerade, nach innen gekrümmt oder nach außen gekrümmt gebildet ist.

6. Bracket nach einem der voranstehenden Ansprüche, **dadurch gekennzeichnet, daß** jeweils radial zum Draht (9) die apikale Fläche (16aF) des Kopfes (16) einen Abstand von der lingualen Padfläche und der vestibulären Hookfläche aufweist, der etwas größer als ein Durchmesser des Drahtes (9) ist, so daß dieser in der Drahtführung (11) in apikaler-inzisaler Richtung bewegbar ist.

7. Bracket nach einem der voranstehenden Ansprüche, **dadurch gekennzeichnet, daß** die Drahtführung (11) vier zum Draht zirkulär versetzte Drahtführungsflächen (11F) aufweist.

8. Bracket nach Anspruch 7, **dadurch gekennzeichnet, daß** das Pad (3) zwei sich in Längsrichtung des Drahtes (9) gegenüberliegende und nach lingual erstreckende Zapfen (19) aufweist, die jeweils eine Drahtführungsfläche (11F) bilden.

9. Bracket nach Anspruch 8, **dadurch gekennzeichnet, daß** die Zapfen (19) im wesentlichen zylinderförmig sind.

10. Bracket nach Anspruch 8 oder 9, **dadurch gekennzeichnet, daß** die Drahtführungsfläche (11F) der Zapfen (19) nach außen gekrümmt oder gerade gebildet ist.

11. Bracket nach einem der Ansprüche 8 bis 10, **dadurch gekennzeichnet, daß** die Zapfen (19) in apikaler Richtung auf gleicher Höhe angeordnet sind, und diese an derselben Seite des Drahts (9), eine Drahtführungsfläche (11 F) bildend, anliegen.

12. Bracket nach Anspruch 11, **dadurch gekennzeichnet, daß** jeweils eine der weiteren Drahtführungsflächen (11F) durch eine vestibuläre Fläche eines okklusalen Hooks (15), eine Lagerfläche (5c) des Bracketkörpers (5) und eine linguale Fläche des Pads (3) gebildet sind.

13. Bracket nach einem der voranstehenden Ansprüche, **dadurch gekennzeichnet, daß** die Drahtführungsflächen (11F) den Draht (9) zirkulär vollständig umschließen.

14. Bracket nach einem der vorangehenden Ansprüche, **dadurch gekennzeichnet, daß** die Drahtführungsflächen (11F) den Draht (9) zirkular teilweise umschließen.

## Claims

1. Bracket (1) with a channel-like wire guide (11) which has wire guide surfaces (11F) for guiding a wire (9) and which is assigned a lateral insertion area (13) for insertion of the wire (9) into the wire guide (11), wherein the insertion area (13) has, in the longitudinal direction of the wire (9), a curved portion (13A) through which the wire (9) can be inserted in an elastically deformed state into the wire guide (11), such that the wire (9), on deforming back into a rectilinear state, latches into the wire guide (11), and the wire guide surfaces (11F) enclose the wire (9) in a circle, such that the wire (9) is held in a longitudinally displaceable manner in the wire guide (11) by the wire guide surfaces (11F) and is secured against escaping laterally from the wire guide (11), **characterized in that** the bracket (1) has a pad (3) for affixing same to a tooth of a patient, a bracket body (5) with a slot (7) for receiving an orthodontic wire (9), and an occlusal hook (15) with a widened head (16), and in each case a wire guide surface (11F) is formed by a lingual pad surface, a vestibular hook surface and an apical surface (16a) of the head (16).

2. Bracket according to Claim 1, **characterized in that** the insertion area (13) comprises an occlusal groove (17o), which is formed in the pad (3) opposite the head (16).

3. Bracket according to Claim 1 or 2, **characterized in that** the wire guide (11) has three wire guide surfaces (11F) offset in a circle with respect to the wire (9).

4. Bracket according to one of the preceding claims, **characterized in that** the insertion area (13) comprises the occlusal groove (17o) and a free space between a vestibular surface of the head (16) and the lingual pad surface opposite thereto.

5. Bracket according to one of the preceding claims, **characterized in that** the wire guide surface (11F) of the head (16) is straight, curved inwards or curved outwards.

6. Bracket according to one of the preceding claims, **characterized in that**, in each case radially with respect to the wire (9), the apical surface (16F) of the head (16) is spaced apart from the lingual pad surface and the vestibular hook surface by a distance that is slightly greater than a diameter of the wire (9), such that the latter is movable in the apical-incisal direction in the wire guide (11).

7. Bracket according to one of the preceding claims, **characterized in that** the wire guide (11) has four wire guide surfaces (11F) offset in a circle with respect to the wire.

8. Bracket according to Claim 7, **characterized in that** the pad (3) has two lingually extending pegs (19) lying opposite each other in the longitudinal direction of the wire (9) and each forming a wire guide surface (11F).

9. Bracket according to Claim 8, **characterized in that** the pegs (19) are substantially cylindrical.

10. Bracket according to Claim 8 or 9, **characterized in that** the wire guide surface (11F) of the pegs (19) is curved outwards or straight.

11. Bracket according to one of Claims 8 to 10, **characterized in that** the pegs (19) are arranged at the same height in the apical direction and bear on the same side of the wire (9), forming a wire guide surface (11F).

12. Bracket according to Claim 11, **characterized in that** the other wire guide surfaces (11F) are each formed by a vestibular surface of an occlusal hook (15), a bearing surface (5c) of the bracket body (5) and a lingual surface of the pad (3).

13. Bracket according to one of the preceding claims, **characterized in that** the wire guide surfaces (11F) completely enclose the wire (9) in a circle.

14. Bracket according to one of the preceding claims, **characterized in that** the wire guide surfaces (11F) partially enclose the wire (9) in a circle.

## Revendications

1. Fixation dentaire (1) présentant un guide-câble (11) en forme de canal qui présente des surfaces (11F) de guidage de câble qui guident un fil (9) et auquel une zone latérale d'insertion (13) qui permet d'insérer le fil (9) dans le guide-câble (11) est associée,
la zone d'insertion (13) présentant dans le sens de la longueur du fil (9) une partie cintrée (13A) par laquelle le fil (9) peut être inséré à l'état déformé élastiquement dans le guide-câble (11), de telle sorte que le fil (9) s'encliquette à l'état rectiligne dans le guide-câble (11) par rétro-déformation et que
les surfaces (11F) de guidage de câble entourent circulairement le fil (9), de telle sorte que le fil (9) est maintenu à coulissement longitudinal dans le guide-câble (11) par les surfaces (11F) de guidage de câble et peut être empêché de s'échapper latéralement du guide-câble (11),
**caractérisée en ce que**
la fixation dentaire (1) présente un tampon (3) qui permet de la coller sur une dent d'un patient, un corps de fixation dentaire (5) doté d'une fente (7) qui reprend un fil orthopédique de mâchoire (9) et un crochet occlusal (15) à tête évasée (16) et
**en ce que** chaque surface (11F) de guidage de câble est formée par une surface linguale de tampon, une surface vestibulaire de crochet et une surface apicale (16aF) de la tête (16).

2. Fixation dentaire selon la revendication 1, **caractérisée en ce que** la zone d'insertion (13) comporte un biseau occlusal (17o) qui est formé dans le tampon (3) face à la tête (16).

3. Fixation dentaire selon la revendication 1 ou 2, **caractérisée en ce que** le guide-câble (11) présente trois surfaces (11F) de guidage de câble décalées circulairement par rapport au fil (9).

4. Fixation dentaire selon l'une des revendications précédentes, **caractérisée en ce que** la zone d'insertion (13) comporte le biseau occlusal (17o) et un espace libre entre une surface vestibulaire de la tête (16) et la surface linguale opposée du tampon.

5. Fixation dentaire selon l'une des revendications précédentes, **caractérisée en ce que** la surface (11F) de guidage de câble de la tête (16) est rectiligne, courbée vers l'intérieur ou courbée vers l'extérieur.

6. Fixation dentaire selon l'une des revendications précédentes, **caractérisée en ce que** la surface apicale (16aF) de la tête (16) présente à chaque fois radialement par rapport au fil (9) une distance vis-à-vis de la surface linguale de tampon et de la surface vestibulaire de crochet qui est légèrement plus grande que le diamètre du fil (9), de telle sorte que ce dernier puisse être déplacé dans la direction apicale-incisale dans le guide-câble (11).

7. Fixation dentaire selon l'une des revendications précédentes, **caractérisée en ce que** le guide-câble (11) présente quatre surfaces (11F) de guidage de câble décalées circulairement par rapport au fil.

8. Fixation dentaire selon la revendication 7, **caractérisée en ce que** le tampon (3) présente deux tourillons (19) qui forment chacun une surface (11F) de guidage de câble, qui sont opposés dans le sens de la longueur du fil (9) et qui s'étendent dans la direction linguale.

9. Fixation dentaire selon la revendication 8, **caractérisée en ce que** les tourillons (19) ont une forme essentiellement cylindrique.

10. Fixation dentaire selon la revendication 8 ou 9, **caractérisée en ce que** la surface (11F) de guidage de câble des tourillons (19) est cintrée vers l'extérieur ou rectiligne.

11. Fixation dentaire selon l'une des revendications 8 à 10, **caractérisée en ce que** les tourillons (19) sont disposés à même hauteur dans la direction apicale et **en ce qu'**ils reposent sur le même côté du fil (9) en formant une surface (11F) de guidage de câble.

12. Fixation dentaire selon la revendication 11, **caractérisée en ce que** chacune des autres surfaces (11F) de guidage de câble est formée par une surface vestibulaire d'un crochet occlusal (15), par une surface de palier (5c) du corps (5) de la fixation dentaire et par une surface linguale du tampon (3).

13. Fixation dentaire selon l'une des revendications précédentes, **caractérisée en ce que** les surfaces (11F) de guidage de câble entourent circulairement la totalité du fil (9).

14. Fixation dentaire selon l'une des revendications précédentes, **caractérisée en ce que** les surfaces (11F) de guidage de câble entourent circulairement une partie du fil (9).
